# EUROPEAN PATENT APPLICATION

(11) **EP 4 819 454 A1**
(43) Date of publication of application: **07.10.2026**
(21) Application number: 25181071.9
(22) Date of filing: 05.06.2025
(51) Int. Cl.: H02K 5/18, H02K 9/14

(54) **MODULAR COOLING SYSTEM FOR STATORS OF ROTATING ELECTRIC MACHINES, ROTATING ELECTRIC MACHINE AND CORRESPONDING RETROFIT KIT**

(30) Priority: 03.04.2025 BR 102025006660
(71) Applicant: WEG Equipamentos Elétricos S.A., 89256-900 Jaraguá do Sul, SC (BR)
(72) Inventor: Schipmann Eger, Roger, 89252-050 Jaraguá do Sul, SC (BR); Klosowski, Adriano José, 89108-000 Massarandubal, SC (BR); Passig, Jhonatan Adilson, 89254-800 Jaraguá do Sul, SC (BR)
(74) Representative: Grünecker Patent- und Rechtsanwälte PartG mbB

(57) **Abstract**

The present invention relates to a modular cooling system (100) for stators (510) of rotating electric machines (500), assembled around a housing (520) of the stator (510) of the rotating electric machine (500), the modular system (100) comprising at least one fairing (200), at least one fan (300) and/or at least one heat sink (400), wherein the fairing (200) comprises at least two fairing pieces (210), wherein the fairing pieces (210) are coupled one to another and the fairing pieces (210) are fixed to each other by pressure fit. The present invention also relates to a rotating electric machine (500) and a retrofit kit comprising at least one modular system (100).

## Description

### Field of application

The present invention pertains to the field of rotating electric machines, in particular of arrangements for cooling magnetic circuits comprising channels or ducts for cooling fluids, notably rotating electric machines comprising means for generating an air flow at room temperature combined with fins to improve the cooling of stators of rotating electric machines.

### Background of the invention

Rotating electric machines are equipment used for transforming electric energy into mechanical energy, in the case of motors, and for transforming mechanical energy into electric energy, in the case of generators. They essentially consist of four main structures, which are housing, stator, rotor, and bearings/caps. In addition to these elements, depending on the distinct features of each rotating electric machine, there may also be auxiliary systems such as cooling, using gases or liquids, in which the fluids commonly used are air or water, respectively.

The housing is a static element responsible for integrating the structures of the rotating electric machine.

The stator is the static active (energized) component responsible for transmitting the magnetic flux for rotating the rotor, in the case of motors, and for transmitting the energy generated by the rotor, in the case of generators, whereas the rotor is the active (energized) component of the rotating electric machine.

The rotor, in turn, is essentially composed of a shaft onto which one or more cages, coils, or permanent magnets are arranged, depending on the construction type and running principle of the rotating electric machine.

The bearings, in turn, are the elements responsible for coupling the rotating parts to the static parts of a rotating electric machine, performing, for instance, the coupling, support and centering of the (rotating) rotor in relation to the (static) stator, allowing for relative movement between rotor and stator, as well as the transmission of forces therebetween.

Systems dedicated to cooling rotating electric machines have the function of reducing the temperature of electrically energized elements, the temperature deriving from the Joule effect resulting from the circulation of current through conductive elements of either the stator or the rotor.

As rotating electric machines operate in the most different rotation conditions, drive and switch-off cycles, mechanical load, and temperature, controlling the temperature of the rotor-stator set, more specifically of the stator, is necessary.

Several cooling arrangements are known in the state of the art, including the structures for external circulation of cooling fluid in the housing. These structures are formed by shrouds that enclose the stator and, associated with external devices such as, for example, fans and heat exchangers or heat sinks, direct the cooling fluid to the surface of the housing, promoting thermal exchange between the heated environment around the rotating electric machine and the external environment, with reduced temperature, resulting in a lower operating temperature than usual without the use of these devices, ensuring an improvement in yield and that the temperature ranges are in accordance with its thermal class and operating class.

This type of additional cooling arrangement, however, requires significant construction changes, especially to the stator housing, which needs to be built so as to comprise or receive a cooling set that involves and encloses the axial extension of the stator, which significantly increases both the dimensions and the weight of the rotating electric machine. A similar situation occurs when applying cooling arrangement to pre-existing electric machines, wherein an additional cooling unit needs to be adapted to the stator and installed around thereof using plates, bases, castings, screws, and other elements necessary for its adaptation and/or fixing to the stator, without, however, there being any advantage in terms of modularity of these solutions.

The challenge therefore lies in designing a cooling system for stators of rotating electric machines that is modular and adaptable to the greatest possible number of types of rotating electric machines and that is, at the same time, simple to build and manufacture, optimizing both the use of raw materials and the manufacturing and assembly process, using the ambient air and without implying an increment in the dimensions and final weight of the rotating electric machine.

### Prior art

There are, in the state of the art, several solutions that aim at the cooling of rotating electric machines by means of circuits comprising cooling fluids such as, for example, the ambient air of the surroundings of the rotating electric machine.

An example is patent document JP6403134, entitled COOLING DEVICE FOR DRIVE MOTOR FOR PRESS MACHINE, which discloses and describes, according to its abstract, a cooling device that cools a servo motor by at least one cooling fan, wherein the cooling device is installed so that the gas exhausted from the cooling fan is inclined by a prescribed angle from a vertical direction of the side surface of the servo motor and so that the cooling fan forms the prescribed angle with the side surface of the servo motor.

The solution proposed by JP6403134 removes the heat from two sides of a square cross-section motor through the use of fans and a casing between each fan and the stator housing, with the airflow occurring in the axial direction of the motor, without the casing involving the stator housing and without the airflow going around (tangentially) the motor housing, and there are also no heat sinks with fins around the motor housing. Furthermore, the JP6403134 device requires the use of screws for its installation and changes on the housing of the electric machine in which it will be installed, without configuring a kit adaptable to more than one external geometry of the stator, also having limitations in relation to the positioning and the number of fans that can be used by a rotating electric machine, and there is also the need to control the inclination of the fan to ensure cooling.

Another relevant prior art document is patent document CN216721081, entitled LARGE-SCALE MOTOR COOLING DEVICE, which discloses and describes, according to its abstract, a large-scale motor cooling device comprising two support plates and a upper plate, the internal sides of the support plates are fixed with adapter tubes, the adapter tubes are fixed with embedded communication tubes, and the embedded communication tubes are fixed with the upper plate. Uniformly distributed spray tubes are fixedly arranged at the lower part of the adapter tube in a coating mode.

Also according to the abstract of CN216721081, in the cooling device, through the cooperative use of the support plates, the upper plate, the fixing plate, and the fixing screws, the two support plates can be placed on both sides of a large-scale motor, then the upper plate is connected to the roof of the two support plates in a coating mode, and the upper plate and the support plates are connected and fixed by means of the fixing screws; and then the fixing plate is taken out, the fixing plate is butt joint with the support plate and the upper plate through the butt joint stakes, the comprehensive involvement of the large-scale motor is reached, and therefore the cooling device of the large-scale motor can be conveniently assembled outside the motor, and the occupied space is less when the transportation.

The solution proposed by CN216721081 is axial cooling and the total length of the motor is clearly affected by its use. This solution requires transfer tubes, upper plate, support plates, fixing plate, screws for its installation, without configuring a kit adaptable to more than one external geometry of the stator, and also having limitations in relation to the positioning and the number of fans that can be used by a rotating electric machine.

As can be inferred from the description above, there is room and demand for a stator cooling system solution that overcomes the disadvantages of the prior art, specially a modular and radial cooling system with a reduced number of components, which configures a kit with symmetrical halves without the need for the use of screws or other means of fixing either for its assembly or for its fixation on the stator, which provides the possibility of varying the number of fans and sinks according to the needs of the design, which has air outlets and sinks positioned around the motor stator housing, which can be installed on a large number of different types of rotating electric machines and which can be installed even with the motor running, which composes a kit adapted to the rotating electric machine, without the need for bases or fixing screws and which allows more than one kit to be assembled on a single rotating electric machine without the need to change the axial length of the rotor.

### Objects of the invention

One of the objects of the invention is therefore to provide a cooling modular system for stators of rotating electric machines according to the features of claim 1 of the appended set of claims.

Another object of the invention is to provide a rotating electric machine according to the features of claim 10 of the appended set of claims.

Yet another object of the present invention is to provide a retrofit kit for a rotating electric machine according to the features of claim 12 of the appended set of claims.

Additional features and details thereof are presented in the dependent claims.

### Brief description of the drawings

For a better understanding and visualization of the object of the invention, it will now be described with reference to the appended figures, representing the technical effect obtained by means of an exemplary embodiment without limiting the scope of the present invention, wherein, schematically:
Figure 1a: shows a perspective view of a fairing piece of a modular system according to the invention;
Figure 1b: shows a perspective view of a fairing piece of a modular system according to the invention;
Figure 2a: shows a side view of a heat sink of a modular system according to the invention;
Figure 2b: shows a front view of the heat sink from Figure 2a;
Figure 3a: shows a perspective view of two fairing pieces from Figure 1 rotated by 180 degrees relative to each other for fairing assembly purposes;
Figure 3b: shows an enlarged partial upper section view of a male fit at the end of one of the fairing pieces from Figure 3a before being inserted into the female fit at the end of the other fairing piece from Figure 3a;
Figure 3c: shows the male and female fits from Figure 3b after insertion and locking of the male fit into the female fit;
Figure 4: shows an exploded view of the modular system comprising a fan according to the invention;
Figure 5: shows a perspective view of the modular system from Figure 4 assembled with one of the fairing pieces partially transparent for the purpose of improving the visualization of the components inside the fairing;
Figure 6: shows a partial front section view of a rotating electric machine comprising the modular system from Figure 4, highlighting the cooling air flow;
Figure 7: shows an exploded view of the modular system comprising two fans and side openings according to the invention;
Figure 8: shows a perspective view of the modular system from Figure 7 assembled with one of the fairing pieces partially transparent for the purpose of improving the visualization of the components inside the fairing;
Figure 9: shows a partial front section view of a rotating electric machine comprising the modular system from Figure 7, highlighting the cooling air flows;
Figure 10a: shows a perspective view of a rotating electric machine comprising a modular system from Figure 7; and
Figure 10b: shows a perspective view of a rotating electric machine comprising two modular systems from Figure 7.

### Detailed description of the invention

The following detailed description refers to the appended drawings in which embodiments of execution of the present invention are represented by way of non-limiting illustration. These embodiments are described so as to allow a person skilled in the art to reproduce their results. Other embodiments resulting from structural, mechanical, logical, electric, and electronic changes are possible and can be performed without departing from the spirit and scope of the present invention. The following detailed description should therefore not be understood as restrictive or limiting.

The present invention refers to a modular cooling system for stators (510) of rotating electric machines (500), or simply modular system (100), comprising at least one fairing (200) assembled around the housing (520) of the stator (510) of the rotating electric machine (500), at least one fan (300) to promote a flow of cooling fluid and/or at least one heat sink (400), wherein the fairing (200) comprises at least one, preferably, but without limiting the invention, at least two fairing pieces (210), preferably equal, wherein for the assembly of the fairing (200) around the housing (520) of the stator (510) of the rotating electric machine (500), the equal fairing pieces (210) are coupled one to another in an inverted mode, by rotating one of the fairing pieces (210) by 180 degrees, around its vertical axis (V), in relation to the other fairing piece (210), and the fairing pieces (210) are fixed to each other by pressure fit.

In an alternative embodiment of the invention, the fairing (200) may have only one fairing piece (210) with a "C" or "U" shape or a combination of these "C" and "U" shapes or, even, other circular, semicircular, open polygonal or closed polygonal shapes, as long as they adapt to the external geometry of the housing (520) of the stator (510) of the rotating electric machine (500).

In another alternative embodiment of the invention, the fairing (200) may have at least two fairing pieces (210) that are not equal and/or not symmetrical, and the non-equal and/or non-symmetrical fairing pieces (210) may also be fixed to each other by pressure fit or yet by another suitable fixing means.

The modular system (100) is applied to rotating electric machines (500) comprising at least one stator (510) comprising at least one housing (520), at least one rotor axis (530) and one rotor (540) and other components and accessories necessary for running a rotating electric machine of the nature dealt with herein.

In the context of the present invention, the term "rotating electric machine" refers broadly to a rotating electric machine, preferably being an electric motor, but which may also be an electric generator.

In the context of the present invention, the term "cooling fluid" refers broadly to a fluid with the function of removing heat from the rotating electric machine generated by its operation, the cooling fluid being, preferably, but not limited to, air, especially the ambient air (AA) of the surroundings of the rotating electric machine.

In the context of the present invention, the term "pressure fit" refers broadly to any and all forms of fixing known in the state of the art that uses fit joints, which may be hook or head joints or the like, to connect pieces quickly and without the need for additional tools or fixers, this form of connection also being known by the name "instant fit" or by "snap-fit".

The fairing (200) comprises at least one, preferably, but without limiting the invention, at least two fairing pieces (210), preferably equal, and is, preferably, but without limiting the invention, made of a synthetic material, non-conductive of electric energy, but may, however, be made of other non-conductive materials and even be coated with non-conductive materials, according to the needs of the design of the rotating electric machine (500).

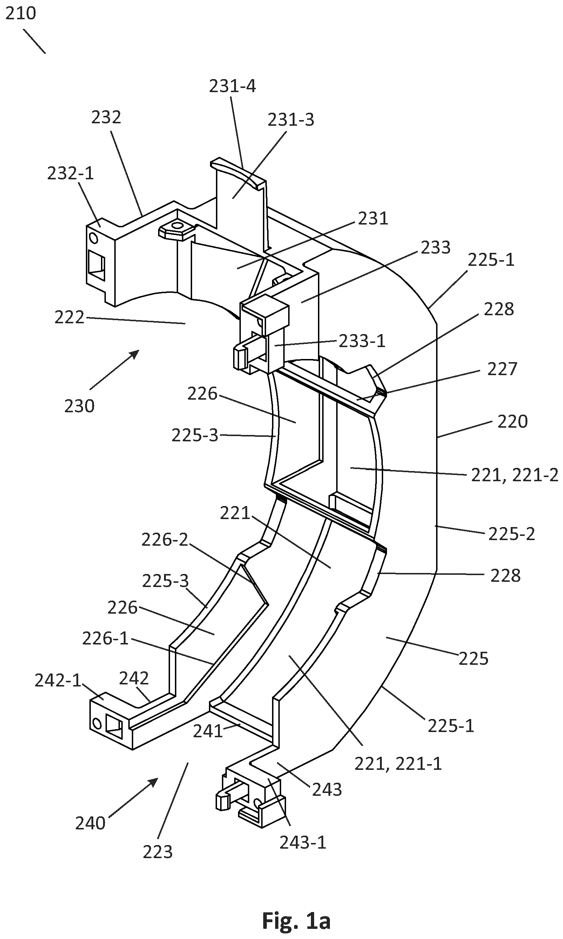

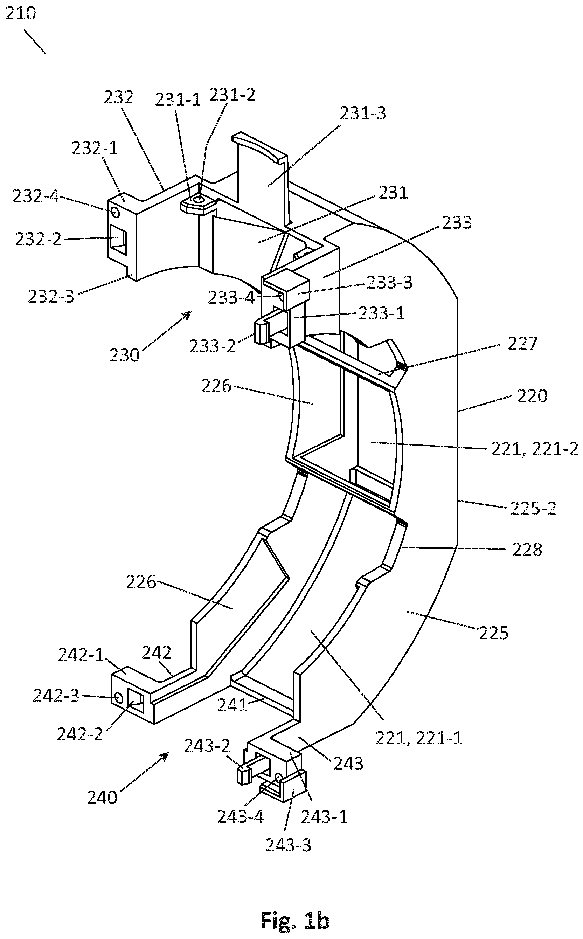

As can be seen especially in **Figures 1a** and **1b****,** each fairing piece (210) comprises a main body (220), a first end (230), and a second end (240).

The main body (220) comprises an internal wall (221) comprising first portions (221-1) with preferably flat ends, the first portions (221-1) being able to be, preferably, but without limiting the invention, interspersed or not, by at least one second portion (221-2). It should be noted that the first portions (221-1) can be flat and/or alternately flat and curved, and that the second portions (221-2) can be curved and/or alternately curved and flat, always depending on the desired aerodynamic features.

The main body (220) further comprises at least one upper opening (222) and at least one lower opening (223), both arranged close to the ends (230, 240), in addition to side walls (225) that project, preferably, but without limiting the invention, radially from the internal wall (221), wherein the side walls (225) project, preferably, but without limiting the invention, radially and perpendicularly from the internal wall (221). It should be noted that the side walls (225) can also project radially and at an inclined mode from the internal wall (221), wherein this inclination can be either outwards or inwards or, alternatively, outwards and inwards.

The side walls (225) comprise, in the region close to the internal wall (221), first portions (225-1) which may be, preferably, but without limiting the invention, interspersed or not by at least one second portion (225-2) and, at their open ends, third portions (225-3), preferably curved, close to cavities (226) for accommodating the heat sinks (400), which form a lower stop (226-1) and one or more lateral stops (226-2) on which the heat sinks (400) are abutted. The side walls (225) may also, eventually and optionally, comprise crossbars (227) for structuring arranged between the side walls (225), and may also, eventually and optionally, comprise one or more fits (228) so that the fairing (200) adapts to eventual protrusions of the external diameter of the housing (520) of the stator (510). It should be noted that the first portions (225-1) can be curved and/or alternately flat and curved, and that the second portions (225-2) can be flat and/or alternately flat and curved, always depending on the desired aerodynamic features. It should also be noted that the curvature radii of the third portions (225-3) must coincide with the external radius of the housing (520) of the stator (510). It should also be noted that the third portions (225-3) can be replaced by non-curved portions, such as, for example, but without limiting the invention, by flat portions.

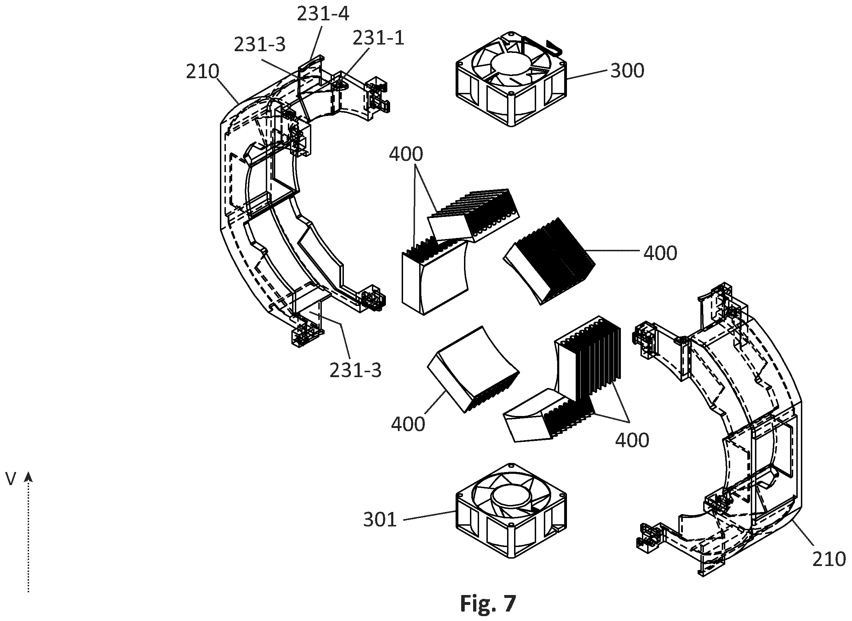

Depending on the power, thermal load, operating regime, and room temperature of the surroundings of the rotating electric machine (500), it may be necessary to use, in addition to the fan (300), at least one additional fan (301), as will be explained in detail later. It should be noted that, in the case of the use of at least one additional fan (301), the second portion (221-2) of the internal wall (221) may comprise side openings (224), as can be seen especially in **Figures 7** to **10****.**

Still referring to **Figures 1a** and **1b****,** the first end (230) has a shape and construction which can accommodate and fix at least one fan (300), comprising an internal wall (231), a first arm (232) preferably perpendicular to the internal wall (231), and a second arm (233) also preferably perpendicular to the internal wall (231), wherein the set comprising the internal wall (231), first arm (232), and the second arm (233), forms an upper opening (222). It should also be noted that the shape and construction of the first end (230) may vary according to the geometry of the fan (300), and may even comprise more than one part.

The internal wall (231) comprises internal tabs (231-1), preferably perpendicular to the internal wall (231), an upper tab (231-3), preferably parallel to the internal wall (231), comprising a short end (231-4), preferably perpendicular to the upper tab (231-3), for pressure fit of the fan (300). It should be noted that one or more internal tabs (231-1) may, eventually and optionally, also comprise at least one hole (231-2) for further fixing the fan (300), if necessary.

The first arm (232) comprises a side tab (232-1), preferably perpendicular to the internal and external faces of the first arm (232), wherein the side tab (232-1) comprises a female fit (232-2) in the form of a cavity with an inclined internal wall (232-5) and a shoulder (232-3). The side tab (232-1) may also, eventually and optionally, comprise one or more holes (232-4) for further fixing the fairing pieces (210) to each other.

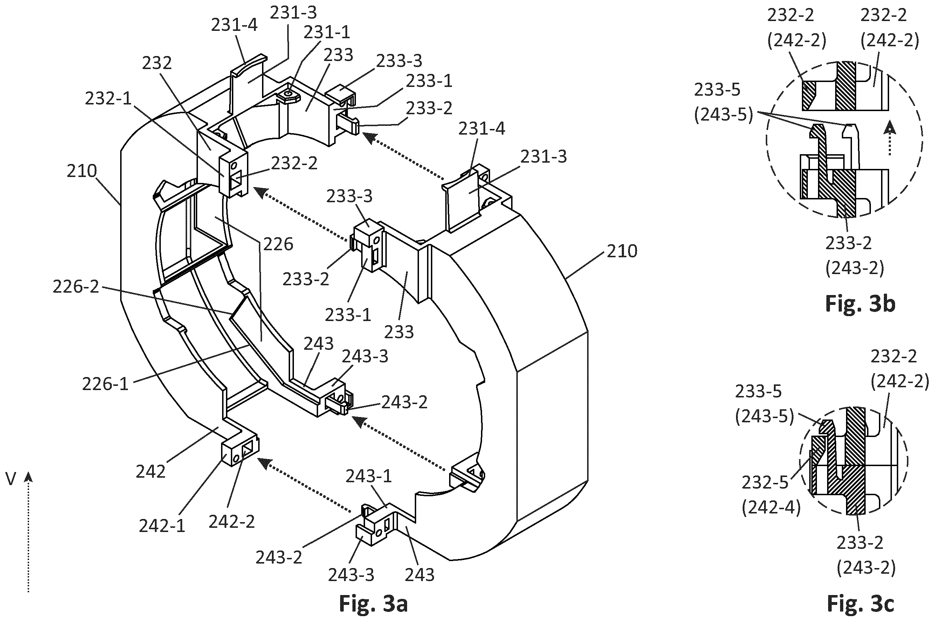

The second arm (233) comprises a side tab (233-1), preferably perpendicular to the internal and external faces of the second arm (233), wherein the side tab (233-1) comprises a male fit (233-2) in the form of a lock with its end (233-5) slightly chamfered, as can be seen especially in **Figures 3b** and 3c, in addition to a protruding tab (233-3) and, eventually and optionally, one or more holes (233-4) for further fixing the fairing pieces (210) to each other.

The second end (240) comprises an internal wall (241), a first arm (242) preferably perpendicular to the internal wall (241) and a second arm (243) also preferably perpendicular to the internal wall (241), wherein the set comprising the internal wall (241), the first arm (242), and the second arm (243) forms a lower opening (223). It should be noted that the shape and construction of the second end (240) may vary according to the design and aerodynamic features of the fairing (200), and may even comprise more than one part.

The internal wall (241) is preferably the lower open end face of the internal wall (221).

The first arm (242) comprises a side tab (242-1), preferably perpendicular to the internal and external faces of the first arm (242), wherein the side tab (242-1) comprises a female fit (242-2) in the form of a cavity with an inclined internal wall (242-4). It should be noted that the side tab (242-1) may also, eventually and optionally, comprise one or more holes (242-3) for further fixing the fairing pieces (210) to each other.

The second arm (243) comprises a side tab (243-1), preferably perpendicular to the internal and external faces of the second arm (243), wherein the side tab (243-1) comprises a male fit (243-2) in the form of a lock with its end (243-5) slightly chamfered and a protruding tab (243-3). It should be noted that the side tab (243-1) may also, eventually and optionally, comprise one or more holes (243-4) for further fixing the fairing pieces (210) to each other.

The fan (300), in the context of the present invention, is any and all electric device known in the prior art and also called a blower, cooler, among other synonyms, provided with a motor that rotates a set of blades at high rotation that are capable of generating a pressure difference between the inlet and the outlet of the fan (300), wherein at the inlet the blades suck in ambient air and, at their outlet, generate an air flow with greater speed and/or greater pressure, which can be blown over the surfaces of the stator (510) and the heat sinks (400). The sizing and number of fans (300) to be used in the modular system (100) may vary according to the type, power, electrical sizing, rhythm, and operating environment of the rotating electric machine (500) for which it is intended.

When using at least one additional fan (301), said additional fan (301) is arranged, preferably, but without limiting the invention, in a position diametrically opposite to the fan (300), preferably in the lower opening (223), as can be seen especially in **Figure 7****.** In this case, each fairing piece (210) comprises a second end (240) equal to the first end (230) in addition to the side openings (224) already described, wherein the second end (240) will comprise an internal wall (231) comprising internal tabs (231-1), wherein the internal wall (231) further comprises an upper tab (231-3), preferably parallel to the internal wall (231), comprising a short end (231-4), preferably perpendicular to the upper tab (231-3) for pressure fit of the additional fan (301). It should be noted that one or more internal tabs (231-1) may, eventually and optionally, also comprise at least one hole (231-2) for further fixing the fan (300), if necessary.

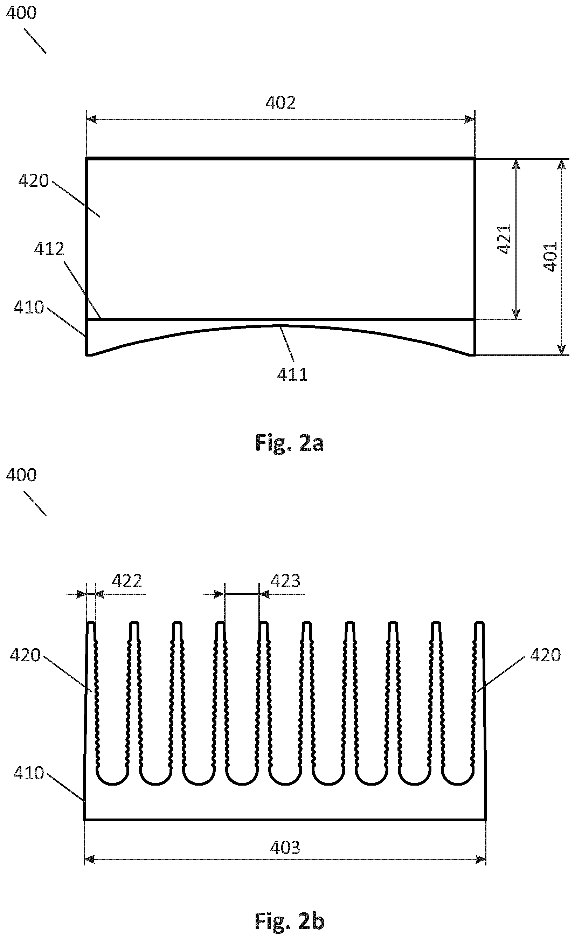

As can be seen especially in **Figures 2a** and **2b****,** the heat sink (400), of sink height (401) and sink length (402) and sink width (403), comprises a base (410) comprising a lower face (411), which may or may not be curved, but always following the geometry of the stator (510) on which the heat sink (400) will be assembled, and an upper face (412), wherein a plurality of dissipation elements (420) of height (421) and thickness (422) project from the upper face (412) and are spaced from each other at a distance (423) so as to promote efficient and effective thermal dissipation. It should be noted that the dissipation elements (420) may have several geometries, and may be fins and/or pins and/or any other applicable geometry. Furthermore, the dissipation elements (420) may have a variable geometry and in this case the thickness (422) and/or the distance (423) may also vary. It should also be noted that, in the context of the present invention, the term "heat sink" refers broadly to passive or active heat sinks, such as, for example, but not limited to, heat sink plates or Peltier effect plates or other type suitable for the design conditions of the rotating electric machine (500).

In yet another alternative embodiment of the invention, the modular system (100) may comprise only at least one fan (300) and no heat sink (400).

In still another alternative embodiment of the invention, the modular system (100) may comprise only at least one heat sink (400) and no fan (300).

The geometry and distribution of the dissipation elements (420) should preferably be such that the first and last dissipation element (420) coincide with the ends of the sink width (403), while the radius or geometry of the lower face (411) should correspond to the radius or external geometry of the housing (520) of the stator (510). It should also be noted that the dimensions of the sink (400), in particular the height (421) and the sink height (401) must be chosen so that the free ends of the dissipation elements (420) abut on the lower stop (226-1) and at least one side stop (226-2) of the fairing (200), and so that the lower face (411) completely abuts on the external diameter or geometry of the housing (520) of the stator (510), thus having heat transfer by conduction from the stator (510) to the heat sink (400).

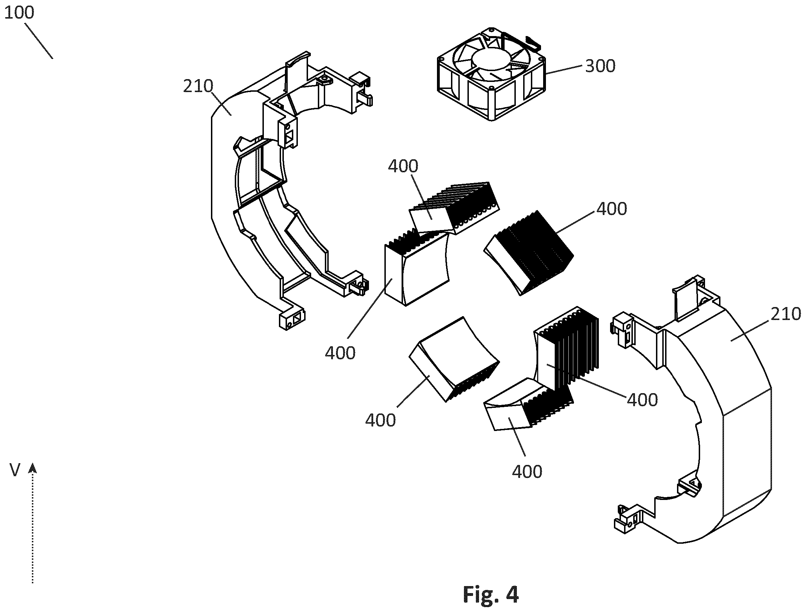

As can be seen especially in **Figures** 3a, 3b, 3c, 4, 5, and 6, for the assembly of the fairing (200), the heat sinks (400) are inserted into the cavities (226), sliding along the side stops (226-2) until the heat sinks (400) completely abut on the lower stops (226-1). The fairing pieces (210) are then coupled one to another in an inverted mode, that is, by rotating one of the fairing pieces (210) by 180 degrees around its vertical axis (V) in relation to the other fairing piece (210) and approaching the two fairing pieces (210) so that the male fit (233-2) of the second arm (233) of the first end (230) fits into the female fit (232-2) of the first arm (232) of the first end (230), wherein the slightly chamfered end (233-5) of the male fit (233-2) slides into the female fit (232-2) over the inclined internal wall (232-5) of the female fit (232-2), slightly deforming until the male fit (233-2) locks by pressure at the ending of the female fit (232-2), wherein the protruding tab (233-3) and the lower and lateral surfaces of the shoulder (232-3) ensure the alignment between the fairing pieces (210).

Likewise, and at the same time, when approaching the inverted fairing pieces (210), the male fit (243-2) of the second arm (243-1) of the second end (240) fits into the female fit (242-2) of the first arm (242) of the second end (240), wherein the slightly chamfered end (243-5) of the male fit (243-2) slides into the female fit (242-2) over the inclined internal wall (242-4) of the female fit (242-2), slightly deforming until the male fit (243-2) locks by pressure at the ending of the female fit (242-2), wherein the protruding tab (243-3) and the lower and external side surfaces of the side tab (242-1) ensure the alignment between the fairing pieces (210).

As described above, the fairing pieces (210) are fixed to each other by means of pressure fits or snap-fit, eliminating the use of fixing elements. However, depending on the design needs and the features of the rotating electric machine (500), this fixing can still, eventually and optionally, be supplemented by means of one or more fixing elements that cooperate with one or more holes (232-4, 233-4, 242-3, 243-4). The same applies for fixing the fans (300, 301).

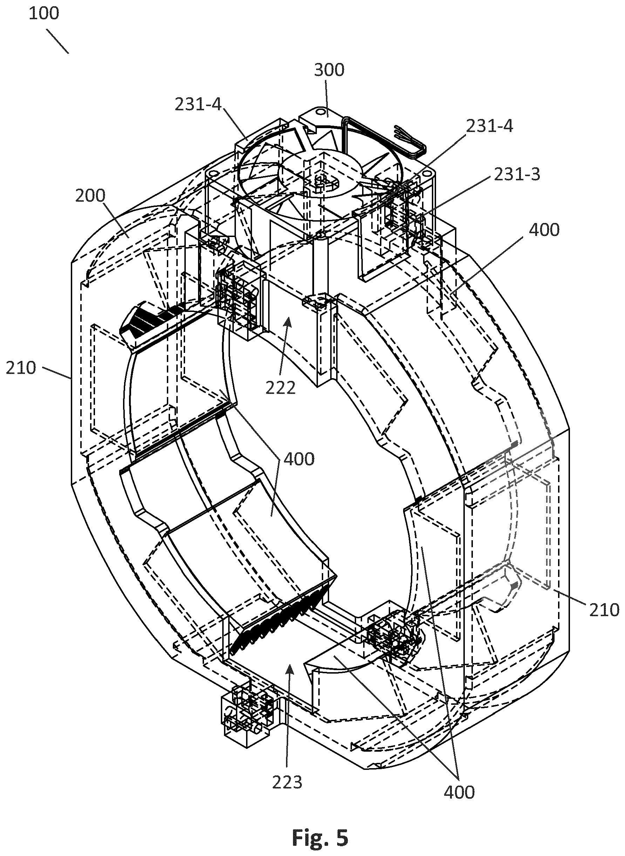

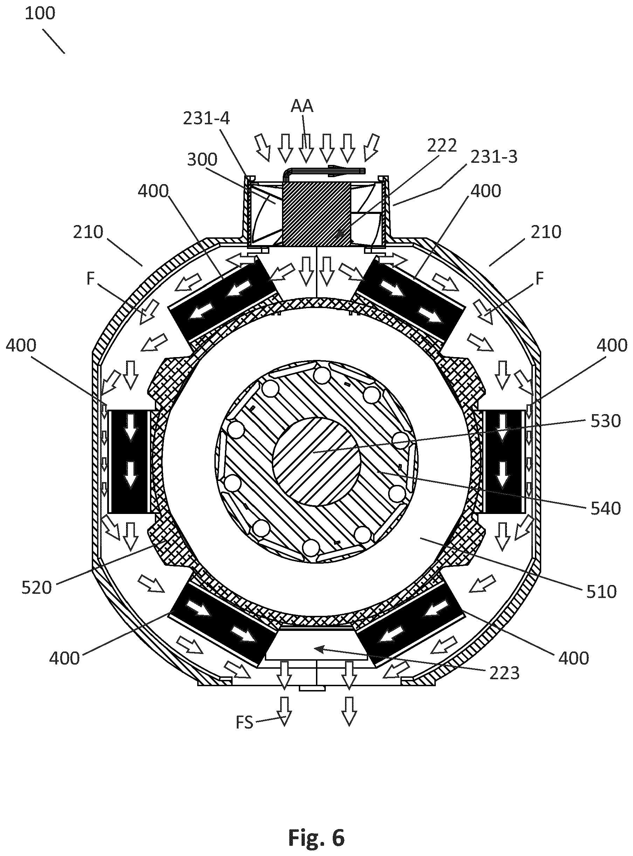

As can be seen especially in **Figures 5** and **6****,** after assembling the fairing (200) comprising the heat sinks (400), at least one fan (300) is preferably fitted vertically downwards into the upper opening (222) until the fan (300) abuts on its lower face on the internal tabs (231-1) and its upper face is locked by the short end (231-4) of the upper tab (231-3).

As can be seen especially in **Figure 6****,** the ambient air (AA) from the surroundings of the rotating electric machine (500) is sucked in by the fan (300) and blown, in the form of a cooling air flow (F), through the upper opening (222) to the inside of the fairing (200), wherein the cooling air flow (F) is conducted along the internal walls (221) and the side walls (225) of the fairing pieces (210), wherein the cooling air flow (F) passes over the heat sinks (400) and between the dissipation elements (420) of the heat sinks (400) until it reaches the lower opening (223) and leaves the fairing (200) in the form of an outlet air flow (FS).

It should be noted that the modular system (100) comprises at least one fan (300), at least one upper opening (222) for cooling air inlet, at least one heat sink (400) and at least one lower opening (223) for cooling air outlet, wherein the fan (300), the upper opening (222), the heat sinks (400), and the lower opening (223) are preferably arranged around the housing (520) of the stator (510), forming a radial ventilation set for the rotating electric machine (500).

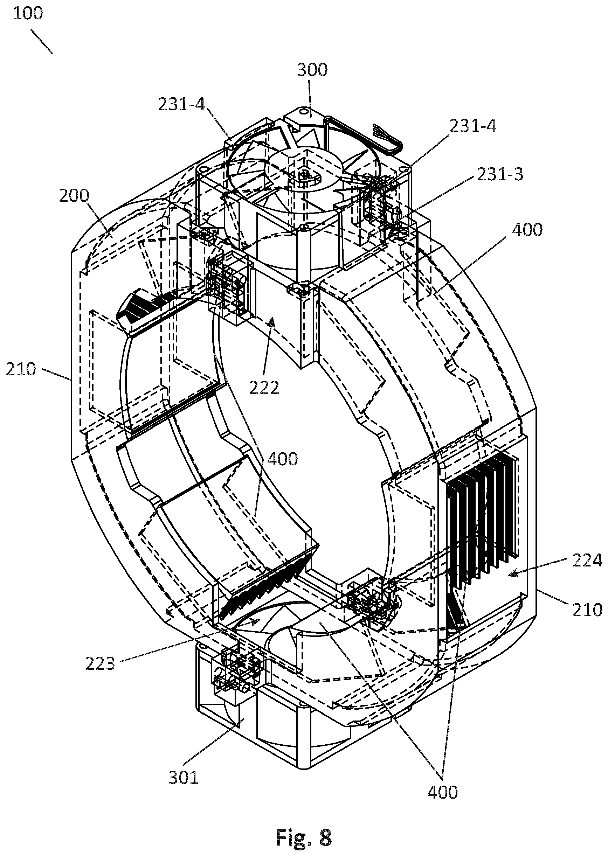

Likewise, when there is a need to use at least one additional fan (301), the fairing (200), after being assembled, comprising the heat sinks (400), receives said at least one additional fan (301) which is preferably fitted vertically upwards in the lower opening (223) until the additional fan (301) abuts on its lower face on the internal tabs (231-1) and its upper face is locked by the short end (231-4) of the upper tab (231-3), as can be seen especially in **Figure 8****.**

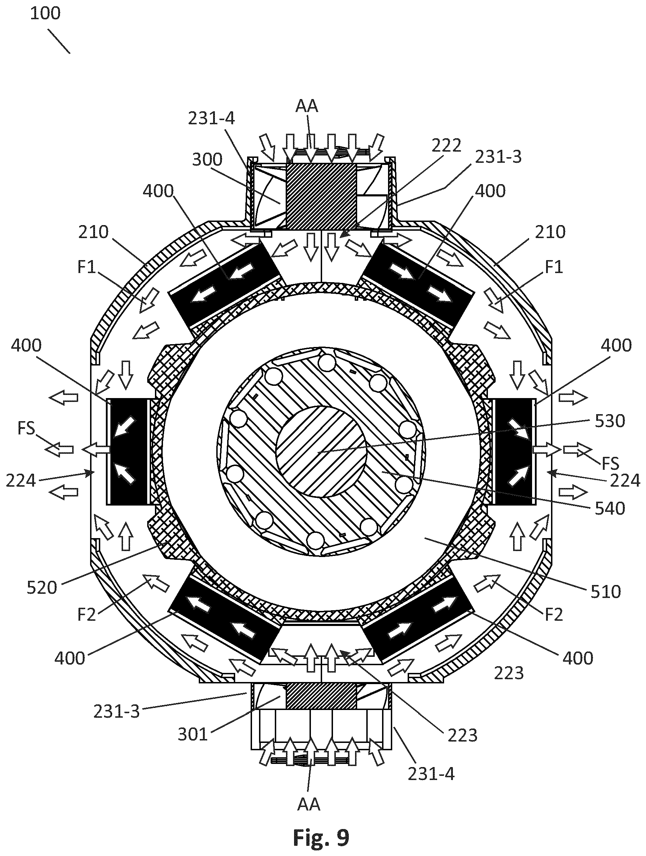

As can be seen especially in **Figure 9****,** the ambient air (AA) from the surroundings of the rotating electric machine (500) is then sucked in by the fan (300) and blown, in the form of a first cooling air flow (F1), through the upper opening (222) into the inside of the fairing (200), wherein the first cooling air flow (F1) is conducted along the internal walls (221) and the side walls (225) of the upper halves of the fairing pieces (210), wherein the first cooling air flow (F1) passes over the heat sinks (400) and between the dissipation elements (420) of the heat sinks (400), until it reaches the side openings (224) and leaves the fairing (200) in the form of an outlet air flow (FS), this conduction being able, eventually and optionally, to be supported by means of one or more deflectors, associated or not to the geometry of the heat sink (400) and/or the fairing (200) and/or the housing (520) of the stator (510). Likewise, the ambient air (AA) from the surroundings of the rotating electric machine (500) is also sucked in by the additional fan (301) and blown in the form of a second cooling air flow (F2) through the lower opening (223) into the inside of the fairing (200), wherein the second cooling air flow (F2) is conducted along the internal walls (221) and the side walls (225) of the lower halves of the fairing pieces (210), wherein the second cooling air flow (F2) passes over the heat sinks (400) and between the dissipation elements (420) of the heat sinks (400), until it also reaches the side openings (224) and leaves the fairing (200) in the form of an outlet air flow (FS). As described above, eventually and optionally one or more deflectors can also be used here.

It should be noted that the modular system (100) using two or more fans (300, 301) comprises at least one fan (300), at least one additional fan (301), at least one upper opening (222) for cooling air inlet, at least one heat sink (400) and at least one side opening (224) for cooling air outlet, wherein the fans (300, 301), the upper opening (222), the heat sinks (400), and the side openings (224) are preferably arranged around the housing (520) of the stator (510), forming a radial ventilation set for the rotating electric machine (500).

This way, the modular system (100) configures a radial cooling unit in the form of a modular kit with symmetrical halves without the need for the use of screws or other means of fixing, neither for its assembly nor for its fixing to the housing (520) of the stator (510), providing the possibility of varying the number of fans (300, 301) and heat sinks (400) according to the needs of the design, having air outlets (223, 224) and heat sinks (400) positioned around the housing (520) of the stator (510) of the rotating electric machine (500), and can be installed in a large number of different types of rotating electric machines (500) and can be installed with the rotating electric machine (500) switched off or running.

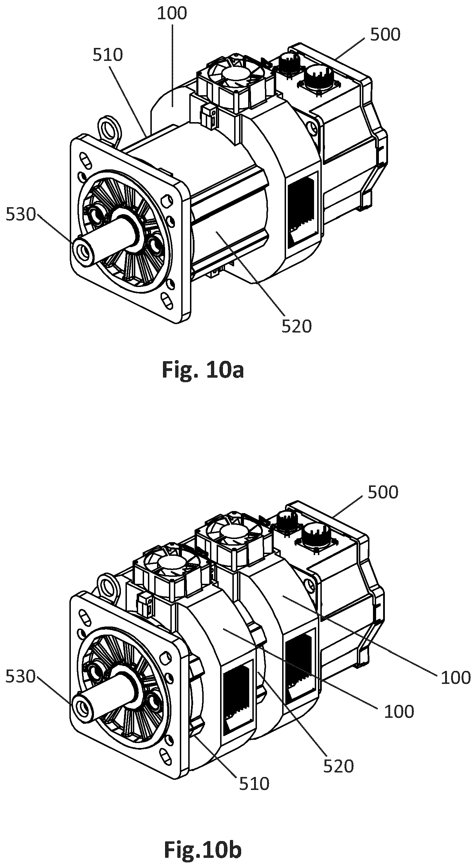

A rotating electric machine (500) can receive a modular system (100), as can be seen especially in **Figure 10a****.** Furthermore, more than one modular system (100) can be assembled on the same rotating electric machine (500) without the need to change the axial length thereof, as can be seen especially in **Figure 10b****.**

### Rotating electric machine

A rotating electric machine (500), according to the invention, is preferably a motor or an electric generator comprising at least one modular system (100).

### Retrofit kit

A retrofit kit, according to the invention, comprises a set of elements which can be associated with an original system of a rotating electric machine (500), comprising at least one modular system (100) according to the invention, wherein the modular system (100) comprises at least one fairing (200), at least one fan (300) to promote a flow of cooling fluid and/or at least one heat sink (400), wherein the fairing (200) comprises at least two fairing pieces (210), preferably equal, wherein for the assembly of the fairing (200), the fairing pieces (210) are coupled one to another in an inverted mode, then, rotating one of the fairing pieces (210) by 180 degrees, around its vertical axis (V), in relation to the other fairing piece (210), and the fairing pieces (210) are fixed to each other by pressure fit.

A retrofit kit, according to the invention, may further comprise, optionally and additionally, all the elements necessary for connecting one or more of the modular system (100) components to the peripherals of the rotating electric machine (500) and to the rotating electric machine (500) itself, such as, but without limiting the invention, cables, wires, connectors, connections, seals, and the like.

Still in the context of the present invention, the term "retrofit" comprises the process of updating or modernizing an existing equipment or system, such as, for example, a pre-existing rotating electric machine (500), to improve its performance, energy efficiency, and functionality, incorporating more modern technologies, enabling its operation according to more current standards for a longer period of time, offering an increased yield and useful life.

### Conclusion

It will be easily understood by one skilled in the art that modifications may be performed herein without departing from the concepts set out in the description above. Such modifications should be considered as included within the scope of the present invention. Consequently, the particular embodiments previously described in detail are illustrative and exemplary only and are non-restrictive as to the scope of the present invention, which should be given the full extent of the appended claims and any and all equivalents thereof.

## Claims

1. Modular cooling system for stators of rotating electric machines, assembled around a housing (520) of the stator (510) of a rotating electric machine (500), the modular system (100) **characterized in that** it comprises at least one fairing (200), at least one fan (300), and at least one heat sink (400), wherein the fairing (200) comprises at least two fairing pieces (210), wherein the fairing pieces (210) are coupled one to another and the fairing pieces (210) are fixed to each other by pressure fit.

2. Modular system, according to claim 1, **characterized in that** the fairing pieces (210) are equal and coupled one to another by rotating one of the fairing pieces (210) by 180 degrees, around its vertical axis (V), in relation to the other fairing piece (210).

3. Modular system, according to claim 1, **characterized in that** it comprises at least one upper opening (222) and at least one lower opening (223), wherein the at least one fan (300), the upper opening (222), the heat sinks (400), and the lower opening (223) are arranged around the housing (520) of the stator (510) of the rotating electric machine (500).

4. Modular system, according to claim 1, **characterized in that** comprising at least one upper opening (222), at least one lower opening (223), at least one fan (300), and at least one additional fan (301), wherein the fans (300, 301), the upper opening (222), the heat sinks (400), and the lower opening (223) are arranged around the housing (520) of the stator (510) of the rotating electric machine (500).

5. Modular system, according to any one of claims 1 to 4, **characterized in that** it allows variation in the number of fans (300, 301) and heat sinks (400) arranged in the fairing (200).

6. Modular system, according to any one of claims 1 to 5, **characterized in that** more than one modular system (100) can be assembled on the same rotating electric machine (500).

7. Modular system, according to any one of claims 1 to 6, **characterized in that** it can be installed in a rotating electric machine (500) with the rotating electric machine (500) switched off or running.

8. Modular system, according to claim 1, **characterized in that** it comprises only at least one fan (300) and no heat sink (400).

9. Modular system, according to claim 1, **characterized in that** it comprises only at least heat sink (400) and no fan (300).

10. Rotating electric machine, **characterized in that** it is an electric motor or an electric generator comprising at least one modular system (100) assembled around a housing (520) of the stator (510) of the rotating electric machine (500), the modular system (100) comprising at least one fairing (200), at least one fan (300), and at least one heat sink (400), wherein the fairing (200) comprises at least two fairing pieces (210), wherein the fairing pieces (210) are coupled one to another and the fairing pieces (210) are fixed to each other by pressure fit.

11. Rotating electric machine, according to claim 10, **characterized in that** the fairing pieces (210) are equal and coupled one to another by rotating one of the fairing pieces (210) by 180 degrees, around its vertical axis (V), in relation to the other fairing piece (210).

12. Retrofit kit, **characterized in that** it comprises a set of elements which can be associated with an original system of a rotating electric machine (500), comprising at least one modular system (100) assembled around a housing (520) of the stator (510) of the rotating electric machine (500), the modular system (100) comprising at least one fairing (200), at least one fan (300), and at least one heat sink (400), wherein the fairing (200) comprises at least two fairing pieces (210), wherein the fairing pieces (210) are coupled one to another and the fairing pieces (210) are fixed to each other by pressure fit.

13. Retrofit kit, according to claim 12, **characterized in that** the fairing pieces (210) are equal and coupled one to another by rotating one of the fairing pieces (210) by 180 degrees, around its vertical axis (V), in relation to the other fairing piece (210).
